Europäisches Patentamt

(19) European Patent Office

Office européen des brevets

(11) Publication number: **0 196 777 B1**

# EUROPEAN PATENT SPECIFICATION

(12)

(45) Date of publication of patent specification :
06.03.91 Bulletin 91/10

(51) Int. Cl.⁵ : **C22C 26/00, B22F 7/06, E21B 10/46, E21B 10/56**

(21) Application number : 86301412.2

(22) Date of filing : 27.02.86

(54) Improvements in or relating to cutting elements for rotary drill bits.

(30) Priority : 01.03.85 GB 8505352

(43) Date of publication of application :
08.10.86 Bulletin 86/41

(45) Publication of the grant of the patent :
06.03.91 Bulletin 91/10

(84) Designated Contracting States :
BE CH DE FR GB LI NL SE

(56) References cited :
EP-A- 0 054 846
US-A- 3 745 623
US-A- 4 151 686
US-A- 4 288 248
US-A- 4 359 335

(73) Proprietor : **Reed Tool Company Limited**
**Hycalog Oldends Lane Industrial Estate**
**Stonehouse, Gloucestershire (GB)**

(72) Inventor : **Wardley, Michael Thomas**
**Elm Cottage Througham The Camp**
**Stroud Gloucestershire (GB)**

(74) Representative : **Carter, Gerald et al**
**Arthur R. Davies & Co. 27 Imperial Square**
**Cheltenham, Gloucestershire GL50 1RQ (GB)**

## Description

The invention relates to cutting elements for rotary drill bits for use in drilling or coring deep holes in subsurface formations.

Rotary drill bits of the kind to which the present invention is applicable comprise a bit body having a shank for connection to a drill string and an inner passage for supplying drilling fluid to the face of the bit. The bit body carries a plurality of so-called 'preform' cutting elements, Each cutting element may be mounted directly on the bit body or on a carrier, such as a stud or post, which is received in a socket in the bit body. One common form of preform cutting element is a polycrystalline diamond compact comprising a hard facing layer of polycrystalline diamond and a backing layer formed of cemented tungsten carbide. Since the backing layer is of less hard material than the facing layer, the two-layer arrangement of the cutting element provides a degree of self-sharpening since, in use, the less hard backing layer wears away more easily than the harder cutting layer.

According to one known method of manufacturing such polycrystalline diamond compacts, as described for example in U.S. Patent Specifications Nos, 3,745,623, 3,609,818 and 3,850,591, a mass of polycrystalline diamond powder is placed in a press with a body of cemented tungsten carbide which is to form the backing layer of the finished compact. In contact with the diamond and/or carbide powder is a catalyst metal such as cobalt. The powder is then subjected to extremely high temperatures and pressures resulting in catalysed re-crystallisation of the diamond particles to yield a compact characterised by diamond-to-diamond bonding in the diamond layer, which diamond layer is bonded to the carbide backing layer.

Diamond compacts manufactured according to such methods, however, have the disadvantage that they are only thermally stable up to temperatures of the order of 700° to 750°C.

In one commonly used method of making rotary drill bits of the type first mentioned above, the bit body is formed by a powder metallurgy process in which tungsten carbide powder is infiltrated with a metal alloy binder in a furnace so as to form a hard matrix. The maximum furnace temperature required to form the matrix may be of the order of 1050-1170°C. Since, as mentioned above, conventional two-layer preform cutting elements are not thermally stable at such temperatures, they normally require to be mounted on the bit body after it has been formed, and this may be a time-consuming and costly process.

There are, however, now available polycrystalline diamond compacts which are thermally stable up to the infiltration temperature, typically about 1100°C.

Such thermally stable compact may be produced, for example, by leeching the cobalt out of compacts manufactured using a cobalt catalyst as described above, but without the tungsten carbide backing layer. Alternatively, use of other forms of catalyst, such as silicon or silicon carbide, instead of cobalt, may result in compacts which are thermally stable at the required temperature. Methods of producing such silicon bonded polycrystalline diamond compacts are described in detail, for example, in U.S. Patent Specifications Nos. 4,151,686 and 4,168,957. Such thermally stable elements may thus be located within the mould in which the bit body is formed so that they become mounted on the bit body in the furnace during the formation thereof. Such thermally stable elements may also have other advantages, for example they may be less costly to manufacture than two-layer cutting elements.

Normally, thermally stable cutting elements have been in the form of blocks of uniform polycrystalline diamond material, and elements have also been made in similar shapes to two-layer cutting elements, e.g. in the form of circular tablets.

Since conventional thermally stable cutting elements are uniform throughout their thickness, however, they do not provide the self-sharpening characteristic of two-layer or multi-layer cutting elements, and this may be a disadvantage particularly since the thermally stable elements may require to be thicker than the diamond layer of a two-layer element to provide the necessary mechanical strength. A degree of self-sharpening may be provided by bonding a thin thermally stable element, after formation, to a less wear resistant highly rigid support material but hitherto difficulties have been experienced in achieving effective bonding of thermally stable elements.

The present invention sets out to overcome this problem by providing a thermally stable cutting element which is inherently self-sharpening by providing for the material nearer the rear face of the element to be less wear resistant than the material near the front cutting face of the element. The invention includes within its scope a number of alternative methods of achieving this effect.

As disclosed in U.S. Patent Specification No. 4359335, the wear resistance of a sintered tungsten carbide product, for use in a drill bit, may be controlled by varying the grain size of the tungsten carbide and/or varying the amount of cobalt added to the tungsten carbide powder. Thus, the larger the tungsten carbide grain size and/or the more cobalt added to the tungsten carbide powder, the softer the sintered product. U.S. Patent Specification No. 4359335 utilises this concept in a non-thermally-stable rock bit insert, to provide a separately preformed harder wear pad on a softer main body of the insert.

U.S. Patent Specification No. 4311490 discloses a method of manufacturing a polycrystalline diamond compact where a mass of diamond particles is located in a press in contact with a mass of metal carbide, the diamond particles being arranged in layers of varying coarseness such that the coarsest layer is closest to the carbide mass and the finest layer is disposed farthest away from the carbide mass. However, the object of the invention described in Specification No. 4311490 is merely to reduce the resistance to flow of catalyst metal or catalyst metal and carbide through the interstices in the diamond particles in the diamond layer.

According to the invention there is provided a method of producing a self-sharpening thermally stable polycrystalline diamond compact comprising placing in a high pressure/high temperature apparatus a mass of polycrystalline diamond particles, said mass having a front face and a rear face, also placing in the apparatus, in contact with the mass of polycrystalline diamond particles, a mass of catalyst metallic material, and subjecting said masses to high pressure and temperature such that the metallic material infiltrates the mass of diamond particles so as to form, on subsequent cooling, a solid composite compact, said polycrystalline diamond compact being rendered thermally stable up to a temperature of about 1100°C by the use of silicon or a silicon alloy as the catalyst metallic material, or by the further step of leaching the catalyst metallic material from the solid composite compact, after formation, characterised in that the polycrystalline diamond particles nearer the rear face of the mass of particles are of larger maximum grain size than the particles nearer the front face thereof, so that the resulting thermally stable composite compact is less wear resistant nearer its rear face and is thereby self-sharpening in use.

The self-sharpening effect is achieved as a result of the portions of the element nearer the rear face wearing away more easily, in use, than the portions nearer the front cutting face.

The catalyst metallic material may be cobalt and may be leached from the solid composite compact after formation.

The mass of polycrystalline diamond particles may comprise at least two contiguous layers of particles, a layer nearer the rear face being of greater maximum grain size than a layer nearer the front face. The polycrystalline diamond particles defining the front face of the mass of particles preferably have a maximum grain size less than 10 micrometers, and the particles defining the rear face preferably have a maximum grain size in the range of 75-500 micrometers.

The packing density of the particles in the mass of polycrystalline particles may vary between said front face and rear face, material nearer the front face being of greater packing density than the material nearer the rear face.

The invention also provides a method of producing a self-sharpening thermally stable polycrystalline diamond compact comprising placing in a high pressure/high temperature apparatus a mass of polycrystalline diamond particles, said mass having a front face and a rear face, also placing in the apparatus, in contact with the mass of polycrystalline diamond particles, a mass of catalyst metallic material, and subjecting said masses to high pressure and temperature such that the metallic material infiltrates the mass of diamond particles so as to form, on subsequent cooling, a solid composite compact, said polycrystalline diamond compact being rendered thermally stable up to a temperature of about 1100°C by the use of silicon or a silicon alloy as the catalyst metallic material, or by the further step of leaching the catalyst metallic material from the solid composite compact, after formation, characterised in that the mass of polycrystalline diamond particles also includes particles of an additive material selected from a refractory metal or a ceramic, a portion of the mass of particles nearer the rear face thereof including a higher proportion of said particles of additive material than a portion of the mass of particles nearer the front face thereof, so that the resulting thermally stable composite compact is less wear resistant nearer its rear face and is thereby self-sharpening in use.

As in the previously described methods, the catalyst metallic material may be cobalt and may be leached from the solid composite compact after formation.

The additive material may be tungsten, or may be selected from boron carbide, silicon carbide, tantalum carbide, tungsten carbide, titanium carbide, titanium nitride, boron nitride and titanium boride.

The mass of polycrystalline diamond particles may comprise at least two contiguous layers of particles, a layer nearer the rear face having a higher proportion of said additive material than a layer nearer the front face. Preferably said layer nearer the front face includes from 0% to 5% of said additive material, by volume, and the layer nearer the rear face includes from 50% to 70% of said additive material, by volume.

The invention further provides a self-sharpening thermally stable cutting element for use in a rotary drill bit comprising a polycrystalline diamond compact having a front face and a rear face, said polycrystalline diamond compact being rendered thermally stable up to a temperature of about 1100°C by the use of silicon or a silicon alloy as a catalyst metallic material during formation of the compact, or by leaching of the catalyst metallic material from the solid composite compact, after formation, characterised in that the polycrystalline diamond material nearer the front face of the compact is of smaller maximum grain size than material nearer the rear face so that the cutting element is less wear resistant nearer its rear face and is thereby self-sharpening in use.

The packing density of the diamond particles in the body of polycrystalline diamond material may vary between said front face and rear face, material nearer the front face being of higher packing density than material nearer the rear face.

The invention further provides a self-sharpening thermally stable cutting element for use in a rotary drill bit comprising a polycrystalline diamond compact having a front face and a rear face, said polycrystalline diamond compact being rendered thermally stable up to a temperature of about 1100°C by the use of silicon or a silicon alloy as a catalyst metallic material during formation of the compact, or by leaching of the catalyst metallic material from the solid composite compact, after formation, characterised in that the body of polycrystalline diamond material includes an additive material selected from a refractory metal or a ceramic, the proportion of additive material in the polycrystalline diamond varying between said front face and rear face in such manner that material nearer the rear face is less wear resistant than material nearer the front face, so that the cutting element is thereby self-sharpening in use.

The additive material may be such that its presence decreases wear resistance, material nearer said front face including a lower proportion of said additive material than material nearer said rear face.

The invention further provides a rotary drill bit for drilling or coring holes in subsurface formations comprising a bit body having a shank for connection to a drill string, an inner passage for supplying drilling fluid to the face of the bit, and a plurality of cutting elements mounted on the bit body, each cutting element comprising a polycrystalline diamond compact having a front face and a rear face, said polycrystalline diamond compact being rendered thermally stable up to a temperature of about 1100°C by the use of silicon or a silicon alloy as a catalyst metallic material during formation of the compact, or by leaching of the catalyst metallic material from the solid composite compact, after formation, characterised in that the polycrystalline diamond material nearer the front face of the compact is of smaller maximum grain size than material nearer the rear face so that the cutting element is less wear resistant nearer its rear face and is thereby self-sharpening in use of the drill bit.

The following is a more detailed description of embodiments of the invention, reference being made to the accompanying drawings in which :

Figure 1 is a diagrammatic perspective view of one form of thermally stable polycrystalline diamond compact.

Figure 2 is a front view of an alternative form of compact.

Figure 3 is a side view of the compact shown in Figure 2, combined with a graph showing the grain size distribution throughout the thickness of the compact, and

Figures 4 and 5, Figures 6 and 7 and Figures 8 and 9 are similar views to Figures 2 and 3 respectively showing the proportions of additive in other polycrystalline diamond compacts according to the invention.

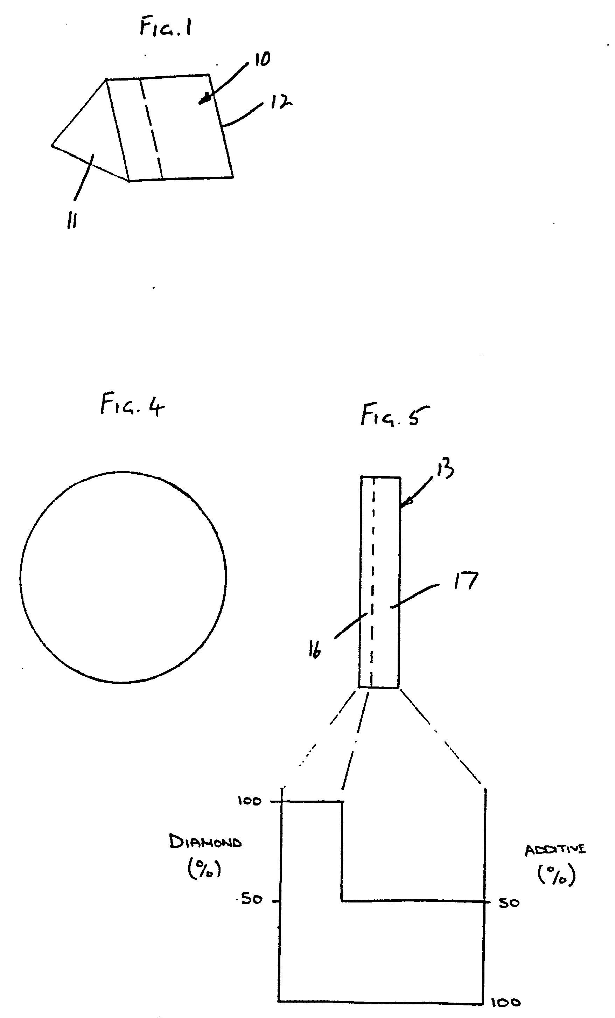

Figure 1 shows one type of thermally stable polycrystalline diamond compact to which the present invention is applicable. In this case the compact 10 is in the form of a cylinder of triangular cross-section, having a front cutting face 11 and a rear face 12.

Normally such compacts are manufactured by placing a mass of particulate diamond material in a press in contact with a catalyst metal such as cobalt. The powder is then subject to extremely high temperatures and pressures resulting in catalysed recrystallisation of the diamond particles to yield a compact characterised by diamond-to-diamond bonding. However, the presence of the cobalt in such a compact would render the compact unstable at temperatures above about 700 to 750°C. In order to render the compact thermally stable at higher temperatures, therefore, the cobalt is leeched out after formation of the compact. Such compacts were mounted at the surface of a rotary drill bit in similar manner to the conventional methods used for natural diamonds. A rotary drill bit incorporating such thermally stable compacts is described and illustrated in Figure 1 of European Patent Specification No. 0,154,936 which is incorporated herein by reference.

In an endeavour to obtain some of the advantages provided by the shapes of two layer, non-thermally stable polycrystalline diamond compacts, thermally stable compacts have also been manufactured in similar configurations to such non-thermally stable compacts, for example in the form of flat circular discs. Such compacts may also be used in a drill bit of generally similar form to that shown in the above-mentioned European Patent Specification No 0,154,936. It will be appreciated, however, that this European Specification illustrates only one example of the many possible variations of the type of bit to which the present invention is applicable.

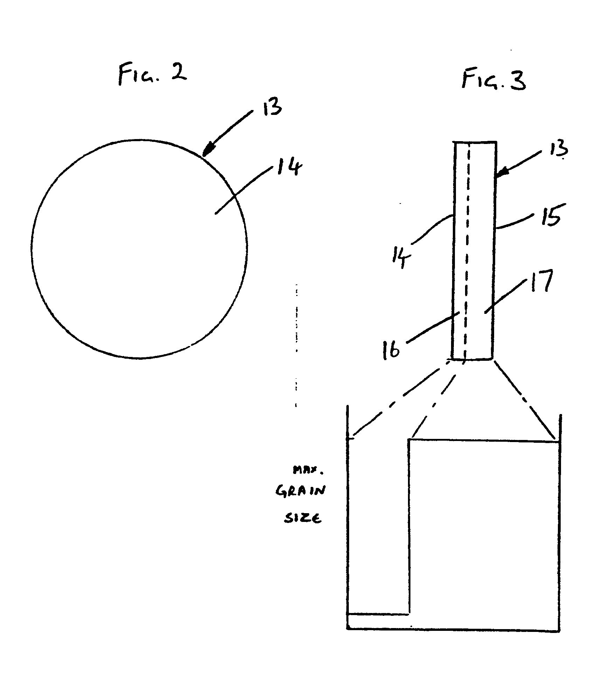

Known forms of thermally stable compacts suffer from the disadvantage that, unlike two-layer and multi-layer compacts of similar shape, they are not self-sharpening In order to provide a degree of self-sharpening in case of thin compacts of the kind shown for example in Figures 2 and 3, attempts have been made to mount such compacts on a carrier of less hard material, such as tungsten carbide, so that the lower wear resistance of the carrier material, behind the front cutting face provided by the compact itself, would give a degree of self-sharpening. However, difficulties have been encountered in mounting such thermally stable compacts on a carrier.

According to the present invention, such compacts are to be rendered self-sharpening by varying the composition of the compact itself across its thickness so that it is less wear resistant nearer the rear face than it is near the front cutting face.

According to one method of achieving this result, the grain size of the polycrystalline diamond particles used in the formation of the compact is varied across the thickness of the compact. For example, referring to Figures 2 and 3, the circular disc-like compact 13 has a front cutting face 14 and a rear face 15. In a front layer 16 of the compact the grain size of the particles is not greater than 10 micrometers whereas in the layer 17 adjacent the rear face 15 the maximum grain size is greater, for example in the range 75 to 500 micrometers.

The wear resistance of polycrystalline diamond depends to a great extent on the size of the diamond particles A smaller maximum particle size in a diamond layer will result in greater wear resistance than a larger maximum particle size and thus the wear resistance of the front layer 16 will be greater than the wear resistance of the rear layer 17 with the result that the compact will be self-sharpening.

Instead of only the two layers 16 and 17 shown in Figure 3, there may be provided any number of intermediate layers of intermediate maximum grain size.

In addition to, or instead of, varying the wear resistance by varying the grain size, the wear resistance may also be varied by varying the grain size distribution or packing density of the diamond particles. Thus, a mix having an appropriate range of different particle sizes will usually provide a higher packing density than a mix of comparatively uniformly sized particles, since the smaller particles will fill the voids between the larger particles. Accordingly the grain size distribution for the different layers 16 and 17, or intermediate layers, may be selected to provide the required variation of wear resistance across the thickness of the cutting element.

In such arrangements where the varying wear resistance is provided by varying the grain size and/or packing density of the diamond particles, the compact may be otherwise manufactured by the conventional process of subjecting the mass of diamond particles to high temperature and pressure in a press in combination with cobalt, the cobalt subsequently being leeched out to render the compact thermally stable. Alternatively, however, there may be used a catalyst metallic material which does not require to be leeched out in order to render the compact thermally stable. For example the metallic material may be silicon. In this case, in the layer 16 adjacent the front cutting face, where the packing density of the diamond particles is greatest, the front layer will consist of diamond particles in a silicon carbide matrix derived from the silicon infiltrant. A little residual silicon will also remain. In the more rearward layer or layers, where the packing density of the diamond particles is less, the proportion of silicon carbide will also decrease and the proportion of unreacted silicon metal will increase. Unlike cobalt, however, silicon metal has a low thermal expansion coefficient and the presence of silicon is therefore less likely to cause thermal instability than the presence of cobalt. It is for the above reasons that the presence of silicon in the finished compact can be tolerated, since it does not render the compact non-thermally stable.

As previously mentioned, in an alternative method of varying the wear resistance of the finished diamond compact, this is achieved by including with the diamond material in the press an additive which alters the wear resistance, the proportion of additive varying across the thickness of the compact.

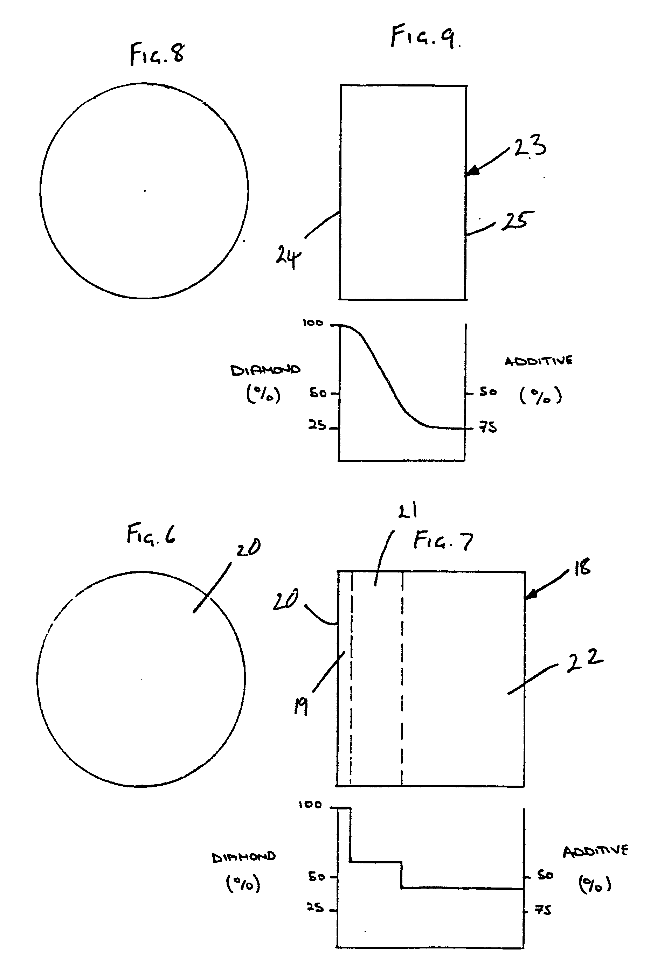

Figures 4 and 5 show such an arrangemeent where the front layer 16 of the compact consists of 100% diamond particles whereas the rear layer 17 contains 50%, by volume, of an additive. The necessary properties of the additive are that it should be able to withstand the temperature and pressure to which it must be subjected in the press during formation of the compact, it should have a high Young's modulus and fairly high strength and a low coefficient of expansion. For example, the Young's modulus of the material is preferably greater than 250 GPa, the strength is preferably greater than 200 MPa, and the coefficient of thermal expansion is preferably less than $10 \times 10^{-6}/°C$.

Suitable additives may be metallic tungsten or other refractory metal or a ceramic such as boron carbide, silicon carbide, tantalum carbide, titanium carbide, titanium nitride, boron nitride or titanium boride.

In the manufacture of the polycrystalline diamond compact, the additive is provided in addition to the catalyst metallic material, which material may either be leeched out as described above after formation of the compact, if it is a high coefficient of thermal expansion material such as cobalt, or may remain in the compact if it is a material of lower thermal coefficient of expansion such as silicon.

Generally speaking, if it is necessary to leech the catalyst material from the finished compact, the proportions of additive in the compact should be less than where leeching is not required since the presence of the additive may inhibit the leeching process by closing the pores in the material.

Figures 6 and 7 show an alternative arrangement where the mass of polycrystalline diamond material is in three layers each containing a different amount of additive. Thus, the compact 18 comprises a front layer 19 adjacent the front cutting face 20 which contains no additive and is 100% diamond, an intermediate layer 21 which contains 40% additive by volume and a rear layer 22 which contains 60% additive by volume.

Figures 8 and 9 show an alternative arrangement where the proportions of additive in the diamond material vary substantially continuously across the thickness of the compact from 0% adjacent the front cutting face 24 to approximately 75% adjacent the rear face 25.

As mentioned above, the catalyst metallic material may be silicon or a silicon alloy. In the case of a silicon alloy the alloy may be selected so as to react with the additive.

For example, the additive may be tungsten carbide and the silicon alloy may comprise 80% silicon and 20% titanium.

Any of the self-sharpening polycrystalline diamond compact cutting elements described above, or otherwise in accordance with the invention, may be mounted on any suitable form of drill bit, such as a drill bit of the kind shown in the above-mentioned European Patent Specification No 0,154,936, incorporated herein by reference. Accordingly, the invention includes within its scope a drill bit having such compacts, as well as the compacts themselves.

## Claims

1. A method of producing a self-sharpening thermally stable polycrystalline diamond compact comprising placing in a high pressure/high temperature apparatus a mass of polycrystalline diamond particles, said mass having a front face and a rear face, also placing in the apparatus, in contact with the mass of polycrystalline diamond particles, a mass of catalyst metallic material, and subjecting said masses to high pressure and temperature such that the metallic material infiltrates the mass of diamond particles so as to form, on subsequent cooling, a solid composite compact, said polycrystalline diamond compact being rendered thermally stable up to a temperature of about 1100°C by the use of silicon or a silicon alloy as the catalyst metallic material, or by the further step of leaching the catalyst metallic material from the solid composite compact, after formation, characterised in that the polycrystalline diamond particles nearer the rear face of the mass of particles are of larger maximum grain size than the particles nearer the front face thereof, so that the resulting thermally stable composite compact is less wear resistant nearer its rear face and is thereby self-sharpening in use.

2. A method according to Claim 1, and in which the catalyst metallic material is leached from the solid composite compact after formation, characterised in that the catalyst metallic material is cobalt.

3. A method according to Claim 1 or Claim 2, characterised in that the mass of polycrystalline diamond particles comprises at least two contiguous layers of particles, a layer nearer the rear face being of greater maximum grain size than a layer nearer the front face.

4. A method according to any of Claims 1 to 3, characterised in that the polycrystalline diamond particles defining the front face of the mass of particles have a maximum grain size less than 10 micrometers, and the particles defining the rear face have a maximum grain size in the range of 75-500 micrometers.

5. A method according to any of Claims 1 to 4, characterised in that the packing density of the particles in the mass of polycrystalline particles varies between said front face and rear face, material nearer the front face being of greater packing density than the material nearer the rear face.

6. A method of producing a self-sharpening thermally stable polycrystalline diamond compact comprising placing in a high pressure/high temperature apparatus a mass of polycrystalline diamond particles, said mass having a front face and a rear face, also placing in the apparatus, in contact with the mass of polycrystalline diamond particles, a mass of catalyst metallic material, and subjecting said masses to high pressure and temperature such that the metallic material infiltrates the mass of diamond particles so as to form, on subsequent cooling, a solid composite compact, said polycrystalline diamond compact being rendered thermally stable up to a temperature of about 1100°C by the use of silicon or a silicon alloy as the catalyst metallic material, or by the further step of leaching the catalyst metallic material from the solid composite compact, after formation, characterised in that the mass of polycrystalline diamond particles also includes particles of an additive material selected from a refractory metal or a ceramic, a portion of the mass of particles nearer the rear face thereof including a higher proportion of said particles of additive material than a portion of the mass of particles nearer the front face thereof, so that the resulting thermally stable composite compact is less wear resistant nearer its rear face and is thereby selfsharpening in use.

7. A method according to Claim 6 and in which the catalyst metallic material is leached from the solid composite compact after formation, characterised in that the catalyst metallic material is cobalt

8. A method according to Claim 6 or Claim 7, characterised in that the additive material is tungsten.

9. A method according to Claim 6 or Claim 7, characterised in that the additive material is selected from boron carbide, silicon carbide, tantalum carbide, tungsten carbide, titanium carbide, titanium nitride, boron nitride and titanium boride.

10. A method according to any of Claims 6 to 9, characterised in that the mass of polycrystalline diamond particles comprises at least two contiguous layers of particles, a layer nearer the rear face having a higher proportion of said additive material than a layer nearer the front face.

11. A method according to Claim 10, characterised in that said layer nearer the front face includes from 0% to 5% of said additive material, by volume.

12. A method according to Claim 10 or Claim 11, characterised in that said layer nearer the rear face includes from 50% to 70% of said additive material, by volume.

13. A self-sharpening thermally stable cutting element for use in a rotary drill bit comprising a polycrystalline diamond compact having a front face and a rear face, said polycrystalline diamond compact being rendered thermally stable up to a temperature of about 1100°C by the use of silicon or a silicon alloy as a catalyst metallic material during formation of the compact, or by leaching of the catalyst metallic material from the solid composite compact, after formation, characterised in that the polycrystalline diamond material nearer the front face of the compact is of smaller maximum grain size than material nearer the rear face so that the cutting element is less wear resistant nearer its rear face and is thereby self-sharpening in use.

14. A cutting element according to Claim 13 characterised in that the packing density of the diamond particles in the body of polycrystalline diamond material varies between said front face and rear face, material nearer the front face being of higher packing density than material nearer the rear face.

15. A self-sharpening thermally stable cutting element for use in a rotary drill bit comprising a polycrystalline diamond compact having a front face and a rear face, said polycrystalline diamond compact being rendered thermally stable up to a temperature of about 1100°C by the use of silicon or a silicon alloy as a catalyst metallic material during formation of the compact, or by leaching of the catalyst metallic material from the solid composite compact, after formation, characterised in that the body of polycrystalline diamond material includes an additive material selected from a refractory metal or a ceramic, the proportion of additive material in the polycrystalline diamond varying between said front face and rear face in such manner that material nearer the rear face is less wear resistant than material nearer the front face, so that the cutting element is thereby self-sharpening in use.

16. A cutting element according to Claim 15, characterised in that the additive material is such that its presence decreases wear resistance, and wherein material nearer said front face includes a lower proportion of said additive material than material nearer said rear face.

17. A rotary drill bit for drilling or coring holes in subsurface formations comprising a bit body having a shank for connection to a drill string, an inner passage for supplying drilling fluid to the face of the bit, and a plurality of cutting elements mounted on the bit body, each cutting element comprising a polycrystalline diamond compact having a front face and a rear face, said polycrystalline diamond compact being rendered thermally stable up to a temperature of about 1100°C by the use of silicon or a silicon alloy as a catalyst metallic material during formation of the compact, or by leaching of the catalyst metallic material from the solid composite compact, after formation, characterised in that the polycrystalline diamond material nearer the front face of the compact is of smaller maximum grain size than material nearer the rear face so that the cutting element is less wear resistant nearer its rear face and is thereby self-sharpening in use of the drill bit.

## Ansprüche

1. Verfahren zum Herstellen eines selbstschärfenden, thermisch stabilen Preßkörpers aus polykristallinem Diamant durch Einbringen einer Masse von polykristallinen Diamantpartikeln in eine Hochdruck/Hochtemperatur-Vorrichtung, wobei die Masse eine Vorderseite und eine Rückseite hat, außerdem Einbringen einer Masse von metallischem Katalysatormaterial in die Vorrichtung in Kontakt mit der Masse von polykristallinen Diamantpartikeln und Beaufschlagen der Massen mit hohem Druck und hoher Temperatur, so daß das metallische Material die Masse von Diamantpartikeln tränkt, so daß beim anschließenden Abkühlen ein fester Verbundpreßkörper gebildet wird, wobei der polykristalline Diamant preßkörper bis zu einer Temperatur von etwa 1100°C thermisch stabil gemacht wird durch die Verwendung von Silicium oder einer Siliciumlegierung als metallisches Katalysatormaterial oder durch den weiteren Schritt des Auslaugens des metallischen Katalysatormaterials aus dem festen Verbundpreßkörper nach dessen Bildung, dadurch gekennzeichnet, daß die polykristallinen Diamantpartikel, die der Rückseite der Masse von Teilchen näher sind, eine größere maximale Korngröße haben als die Partikel, die deren Vorderseite näher sind, so daß der sich ergebende thermisch stabile Verbundpreßkörper näher bei seiner Rückseite weniger verschleißfest und dadurch im Gebrauch selbstschärfend ist.

2. Verfahren nach Anspruch 1, in welchem das metallische Katalysatormaterial aus dem festen Verbundpreßkörper nach dessen Bildung ausgelaugt wird, dadurch gekennzeichnet, daß das metallische Katalysatormaterial Kobalt ist.

3. Verfahren nach Anspruch 1 oder Anspruch 2, dadurch gekennzeichnet, daß die Masse von polykristallinen Diamantpartikeln wenigstens zwei aneinanderliegende Schichten von Partikeln umfaßt, von denen eine Schicht, die näher bei der Rückseite ist, eine größere maximale Korngröße als eine Schicht hat, die näher bei der Vorderseite ist.

4. Verfahren nach einem der Ansprüche 1 bis 3, dadurch gekennzeichnet, daß die polykristallinen Diamantpartikel, welche die Vorderseite der Masse von Partikeln bilden, eine maximale Korngröße von weniger als 10 Mikrometer haben und daß die Partikel, welche die Rückseite bilden, eine maximale Korngröße in dem Bereich von 75-500 Mikrometer haben.

5. Verfahren nach einem der Ansprüche 1 bis 4, dadurch gekennzeichnet, daß die Packungsdichte der Partikel in der Masse von polykristallinen Partikeln zwischen der Vorderseite und der Rückseite variiert, wobei das Material, das näher bei der Vorderseite ist, eine größere Packungsdichte hat als das Material, das näher bei der Rückseite ist.

6. Verfahren zum Herstellen eines selbstschärfenden, thermisch stabilen, polykristallinen Diamantpreßkörpers durch Einbringen einer Masse polykristalliner Diamantpartikel in eine Hochdruck/Hochtemperatur-Vorrichtung, wobei die Masse eine Vorderseite und eine Rückseite hat, außerdem Einbringen einer Masse metallischen Katalysatormaterials in die Vorrichtung in Kontakt mit der Masse polykristalliner Diamantpartikel und Beaufschlagen der Massen mit hohem Druck und hoher Temperatur, so daß das metallische Material die Masse von Diamantteilchen tränkt, so daß beim anschließenden Abkühlen ein fester Verbundpreßkörper gebildet wird, wobei der polykristalline Diamantpreßkörper bis zu einer Temperatur von etwa 1100°C durch die Verwendung von Silicium oder einer Siliciumlegierung als metallisches Katalysatormaterial oder durch den weiteren Schritt des Auslaugens des metallischen Katalysatormaterials aus dem festen Verbundpreßkörper nach dessen Bildung thermisch stabil gemacht wird, dadurch gekennzeichnet, daß die Masse polykristalliner Diamantpartikel außerdem Partikel eines Zusatzmaterials enthält, das aus einem hochschmelzenden Metall oder einer Keramik ausgewählt wird, wobei ein Teil der Masse von Partikeln, der näher bei deren Rückseite ist, einen höheren Anteil der Partikel des Zusatzmaterials enthält als ein Teil der Masse von Partikeln, der näher bei deren Vorderseite ist, so daß der sich ergebende thermisch stabile Verbundpreßkörper näher bei seiner Rückseite weniger verschleißfest und dadurch im Gebrauch selbstschärfend ist.

7. Verfahren nach Anspruch 6, bei welchem das metallische Katalysatormaterial aus dem festen Verbundpreßkörper nach dessen Bildung ausgelaugt wird, dadurch gekennzeichnet, daß das metallische Katalysatormaterial Kobalt ist.

8. Verfahren nach Anspruch 6 oder Anspruch 7, dadurch gekennzeichnet, daß das Zusatzmaterial Wolfram ist.

9. Verfahren nach Anspruch 6 oder Anspruch 7, dadurch gekennzeichnet, daß das Zusatzmaterial aus Borcarbid, Siliciumcarbid, Tantalcarbid, Wolframcarbid, Titancarbid, Titannitrid, Bornitrid und Titanborid ausgewählt wird.

10. Verfahren nach einem der Ansprüche 6 bis 9, dadurch gekennzeichnet, daß die Masse polykristalliner Diamantpartikel wenigstens zwei aneinandergrenzende Schichten von Partikeln umfaßt, von denen eine Schicht, die näher bei der Rückseite ist, einen höheren Anteil des Zusatzmaterials hat als eine Schicht, die näher bei der Vorderseite ist.

11. Verfahren nach Anspruch 10, dadurch gekennzeichnet, daß die Schicht näher bei der Vorderseite 0 Vol.% bis 5 Vol.% des Zusatzmaterials enthält.

12. Verfahren nach Anspruch 10 oder Anspruch 11, dadurch gekennzeichnet, daß die Schicht näher bei der Rückseite 50 Vol.% bis 70 Vol.% des Zusatzmaterials enthält.

13. Selbstschärfendes, thermisch stabiles Schneidelement zur Verwendung bei einem Drehbohrmeißel, mit einem polykristallinen Diamantpreßkörper, der eine Vorderseite und eine Rückseite hat, wobei der polykristalline Diamantpreßkörper bis zu einer Temperatur von etwa 1100°C durch die Verwendung von Silicium oder einer Siliciumlegierung als metallischem Katalysatormaterial während der Bildung des Preßkörpers oder durch Auslaugen des metallischen Katalysatormaterials aus dem festen Verbundpreßkörper nach dessen Bildung thermisch stabil gemacht wird, dadurch gekennzeichnet, daß das polykristalline Diamantmaterial, das näher bei der Vorderseite des Preßkörpers ist, eine kleinere maximale Korngröße als das Material hat, das näher bei der Rückseite ist, so daß das Schneidelement näher bei seiner Rückseite weniger verschleißfest und dadurch im Gebrauch selbstschärfend ist.

14. Schneidelement nach Anspruch 13, dadurch gekennzeichnet, daß die Packungsdichte der Diamantpartikel in dem Körper aus polykristallinem Diamantmaterial zwischen der Vorderseite und der Rückseite variiert, wobei Material näher bei der Vorderseite eine höhere Packungsdichte hat als Material näher bei der Rückseite.

15. Selbstschärfendes, thermisch stabiles Schneidelement zur Verwendung bei einem Drehbohrmeißel, mit einem polykristallinen Diamantpreßkörper, der eine Vorderseite und eine Rückseite hat, wobei der polykristalline Diamantpreßkörper bis zu einer Temperatur von etwa 1100°C durch die Verwendung von Silicium oder einer Siliciumlegierung als metallischem Katalysatormaterial während der Bildung des Preßkörpers oder durch Auslaugen des metallischen Katalysatormaterials aus dem festen Verbundpreßkörper nach dessen Bildung thermisch stabil gemacht wird, dadurch gekennzeichnet, daß der Körper polykristallinen Diamantmaterials ein Zusatzmaterial enthält, das aus einem feuerfesten Metall oder einer Keramik ausgewählt wird, wobei der Anteil an Zusatzmaterial in dem polykristallinen Diamant zwischen der Vorderseite und der Rückseite so variiert, daß Material näher bei der Rückseite weniger verschleißfest ist als Material näher bei der Vorderseite, so daß das Schneidelement dadurch im Gebrauch selbstschärfend ist.

16. Schneidelement nach Anspruch 15, dadurch gekennzeichnet, daß das Zusatzmaterial so ist, daß seine Gegenwart die Verschleißfestigkeit verringert, wobei Material näher bei der Vorderseite einen geringeren Anteil des Zusatzmaterials enthält als Material näher bei der Rückseite.

17. Drehbohrmeißel zum Bohren oder Kernbohren von Löchern in untertägigen Formationen, mit einem Meißelkörper, der einen Schaft zur Verbindung mit einem Bohrgestänge hat, einen inneren Kanal zum Zuführen von Spülflüssigkeit zu der Stirnseite des Meißels und mehrere Schneidelemente, die an dem Meißelkörper befestigt sind, wobei jedes Schneidelement einen polykristallinen Diamantpreßkörper aufweist, der eine Vorderseite und eine Rückseite hat, wobei der polykristalline Diamantpreßkörper bis zu einer Temperatur von etwa 1100°C durch die Verwendung von Silicium oder einer Siliciumlegierung als metallischem Katalysatormaterial während der Bildung des Preßkörpers oder durch Auslaugen des metallischen Katalysatormaterials aus dem festen Verbundpreßkörper nach dessen Bildung thermisch stabil gemacht wird, dadurch gekennzeichnet, daß das polykristalline Diamantmaterial, das sich näher bei der Vorderseite des Preßkörpers befindet, eine kleinere maximale Korngröße als Material hat, das sich näher bei der Rückseite befindet, so daß das Schneidelement näher bei seiner Rückseite weniger verschleißfest und dadurch bei der Benutzung des Bohrmeißels selbstschärfend ist.

## Revendications

1. Procédé de fabrication d'un élément compact en diamant polycristallin, stable thermiquement, autoaffûtable, dans lequel on place, dans un appareil à haute pression/haute température, une masse de particules de diamant polycristallin, cette masse ayant une face antérieure et une face postérieure, on place également dans l'appareil, en contact avec la masse de particules de diamant polycristallin, une masse d'un matériau métallique catalyseur et on soumet ces masses à une pression et à une température élevées de telle façon que le matériau métallique s'infiltre dans la masse de particules de diamant de manière à former, après refroidissement, un élément compact composite solide, cet élément compact en diamant polycristallin étant rendu stable thermiquement jusqu'à une température d'environ 1100°C par suite de l'utilisation du silicium ou d'un alliage de silicium en tant que matériau métallique catalyseur ou bien par suite de la prévision de l'étape additionnelle d'épuisement du matériau métallique catalyseur à partir de l'élément compact composite solide, après la formation, caractérisé en ce que les particules de diamant polycristallin qui sont plus proches de la face postérieure de la masse de particules, ont une dimension de grain maximale plus grande que celle des particules plus proches de la face antérieure de cette masse si bien que l'élément compact composite, stable thermiquement, qui en résulte, est moins résistant à l'usure dans une zone plus proche de sa face postérieure et qu'il est ainsi autoaffûtable en cours d'utilisation.

2. Procédé suivant la revendication 1 dans lequel le matériau métallique catalyseur est épuisé à partir de l'élément compact composite solide, après la formation, caractérisé en ce que le matériau métallique catalyseur est du cobalt.

3. Procédé suivant l'une quelconque des revendications 1 ou 2 caractérisé en ce que la masse de particules de diamant polycristallin comprend au moins deux couches contiguës de particules, une couche plus proche de la face postérieure ayant une dimension de grain maximale plus grande que celle d'une couche plus proche de la face antérieure.

4. Procédé suivant l'une quelconque des revendications 1 à 3 caractérisé en ce que les particules de diamant polycristallin définissant la face antérieure de la masse de particules ont une dimension de grain maximale inférieure à 10 micromètres et les particules définissant la face postérieure ont une dimension de grain maximale comprise dans la gamme de 75-500 micromètres.

5. Procédé suivant l'une quelconque des revendications 1 à 4 caractérisé en ce que la densité de tassement des particules dans la masse de particules polycristallines varie entre la face antérieure et la face postérieure, le matériau plus proche de la face antérieure ayant une densité de tassement plus grande que le matériau plus proche de la face postérieure.

6. Procédé de fabrication d'un élément compact en diamant d'un élément compact en diamant polycristallin, stable thermiquement, autoaffûtable, dans lequel on place, dans un appareil à haute pression-/haute température, une masse de particules de diamant polycristallin, cette masse ayant une face antérieure et une face postérieure, on place également dans l'appareil, en contact avec la masse de particules de diamant polycristallin, une masse d'un matériau métallique catalyseur et on soumet ces masses à une pression et à une température élevées de telle façon que le matériau métallique s'infiltre dans la masse de particules de diamant de manière à former, après refroidissement, un élément compact composite solide, cet élément compact en diamant polycristallin étant rendu stable thermiquement jusqu'à une température d'environ 1100°C par suite de l'utilisation de silicium ou d'un alliage de silicium en tant que matériau métallique catalyseur ou bien par suite de la pension de l'étape additionnelle d'épuisement du matériau métallique catalyseur à partir de l'élément compact composite solide, après la formation, caractérisé en ce que la masse de particules de diamant polycristallin comporte également des particules d'un matériau additionnel choisi parmi un métal réfractaire ou une céramique, une partie de la masse de particules qui est plus proche de la face postérieure de cette masse de particules, comportant une plus grande proportion de particules du matériau additionnel qu'une partie de la masse de particules plus proche de la face antérieure de cette masse si bien que l'élément compact composite, stable thermiquement, qui en résulte, est moins résistant à l'usure dans une zone plus proche de sa face postérieure et qu'il est ainsi autoaffûtable en cours d'utilisation.

7. Procédé suivant la revendication 6 dans lequel le matériau métallique catalyseur est épuisé à partir de l'élément compact composite solide, après la formation, caractérisé en ce que le matériau métallique catalyseur est du cobalt.

8. Procédé suivant l'une quelconque des revendications 6 ou 7 caractérisé en ce que le matériau additionnel est du tungstène.

9. Procédé suivant l'une quelconque des revendications 6 ou 7 caractérisé en ce que le matériau additionnel est choisi parmi le carbure de bore, le carbure de silicium, le carbure de tantale, le carbure de tungstène, le carbure de titane, la nitrure de titane, le nitrure de bore et le borure de titane.

10. Procédé suivant l'une quelconque des revendications 6 à 9 caractérisé en ce que la masse de particules de diamant polycristallin comprend au moins deux couches contiguës de particules, une couche plus proche de la face postérieure ayant une proportion de matériau additionnel plus grande que celle d'une couche plus proche de la face antérieure.

11. Procédé suivant la revendication 10 caractérisé en ce que la couche plus proche de la face antérieure comporte de 0% à 5% de matériau additionnel, en volume.

12. Procédé suivant l'une quelconque des revendications 10 ou 11 caractérisé en ce que la couche plus proche de la face antérieure comporte de 50% à 70% de matériau additionnel, en volume.

13. Elément de coupe stable thermiquement, autoaffûtable, utilisable dans un trépan de forage rotatif, comprenant un élément compact en diamant polycristallin ayant une face antérieure et une face postérieure, cet élément compact en diamant polycristallin étant rendu stable thermiquement jusqu'à une température d'environ 1100°C par suite de l'utilisation du silicium ou d'un alliage de silicium en tant que matériau métallique catalyseur pendant la formation de l'élément compact ou bien par épuisement du matériau métallique catalyseur à partir de l'élément compact composite solide, après la formation, caractérisé en ce que le matériau en diamant polycristallin qui est plus proche de la face antérieure de l'élément compact, a une dimension de grain maximale plus petite que celle du matériau plus proche de la face postérieure si bien que l'élément de coupe, est moins résistant à l'usure dans une zone plus proche de sa face postérieure et qu'il est ainsi autoaffûtable en cours d'utilisation.

14. Elément de coupe suivant la revendication 13 caractérisé en ce que la densité de tassement des particules de diamant dans la masse du matériau en diamant polycristallin varie entre la face antérieure et la face postérieure, le matériau plus proche de la face antérieure ayant une densité de tassement plus grande que le matériau plus proche de la face postérieure.

15. Elément de coupe stable thermiquement, autoaffûtable, utilisable dans un trépan de forage rotatif, comprenant un élément compact en diamant polycristallin ayant une face antérieure et une face postérieure, cet élément compact en diamant polycristallin étant rendu stable thermiquement jusqu'à une température d'environ 1100°C par suite de l'utilisation du silicium ou d'un alliage de silicium en tant que matériau métallique catalyseur pendant la formation de l'élément compact ou bien par épuisement du matériau métallique catalyseur à partir de l'élément compact composite solide, après la formation, caractérisé en ce que la masse de particules de diamant polycristallin comporte également un matériau additionnel choisi parmi un métal réfractaire ou une céramique, une partie de la masse de particules qui est plus proche de la face postérieure de cette masse de particules, comportant une plus grande proportion de particules du matériau additionnel qu'une partie de la masse de particules plus proche de la face antérieure de cette masse si bien que l'élément compact composite, stable thermiquement, qui en résulte est moins résistant à l'usure dans une zone plus proche de sa face postérieure et qu'il est ainsi autoaffûtable en cours d'utilisation.

16. Elément de coupe suivant la revendication 15 caractérisé en ce que le matériau additionnel est tel que sa présence diminue la résistance à l'usure et le matériau plus proche de la face antérieure comporte une plus faible proportion de ce matériau additionnel que le matériau plus proche de la face postérieure.

17. Trépan de forage rotatif pour forer des trous ou extraire des carottes dans des formations souterraines, comprenant un corps de trépan ayant une jupe pour son accouplement à un train de tiges de forage, un passage interne pour fournir un fluide de forage à la surface du trépan et une pluralité d'éléments de coupe montés sur le corps du trépan, chaque élément de coupe comprenant un élément compact en diamant polycristallin ayant une face antérieure et une face postérieure, cet élément compact en diamant polycristallin étant rendu stable thermiquement jusqu'à une température d'environ 1100°C par suite de l'utilisation du silicium ou d'un alliage de silicium en tant que matériau métallique catalyseur pendant la formation de l'élément compact ou bien par épuisement du matériau métallique catalyseur à partir de l'élément compact composite solide, après la formation, caractérisé en ce que le matériau en diamant polycristallin qui est plus proche de la face antérieure de l'élément compact, a une dimension de grain maximale plus petite que celle du matériau plus proche de la face postérieure si bien que l'élément de coupe, est moins résistant à l'usure dans une zone plus proche de sa face postérieure et qu'il est ainsi autoaffûtable en cours d'utilisation du trépan de forage.

Fig. 1

Fig. 4

Fig. 5

DIAMOND
(%)

ADDITIVE
(%)

100

50

50

100

Fɪɢ. 2

13

14

Fɪɢ. 3

13

15

14

17

16

MAX.
GRAIN
SIZE

Fig. 8

Fig. 9.

23

24

25

DIAMOND
(%)

100

50

25

ADDITIVE

50    (%)

75

Fig. 6

20

21

Fig. 7

20

18

19

22

DIAMOND
(%)

100

50

25

ADDITIVE

50    (%)

75